# EUROPÄISCHE PATENTANMELDUNG

(11) **EP 1 884 307 A1**
(43) Veröffentlichungstag der Anmeldung: **06.02.2008**
(21) Anmeldenummer: 07014639.4
(22) Anmeldetag: 26.07.2007
(51) Int. Cl.: B23K 9/10, B23K 9/32

(54) **Elektrische Stromquelle**

(30) Priorität: 01.08.2006 DE 102006036178
(71) Anmelder: Lorch Schweisstechnik GmbH, 71549 Auenwald (DE)
(72) Erfinder: Jaeschke, Birger, Dr., 71522 Backnang (DE)
(74) Vertreter: Hoeger, Stellrecht & Partner Patentanwälte

(57) **Zusammenfassung**

Die vorliegende Erfindung betrifft eine auf Baustellen einsetzbare elektrische Stromquelle (1) für eine Elektroschweißanlage oder eine Plasmaschweiß- oder -schneidanlage mit einem Netzkabel (4) zum Anschluss an ein Stromnetz. Erfindungsgemäß ist die Stromquelle (1) in einer Kabeltrommel (2) für das Netzkabel (4) untergebracht, die in einem Traggestell (3) drehbar gelagert ist.

## Beschreibung

Die Erfindung bezieht sich auf eine auf Baustellen einsetzbare elektrische Stromquelle für eine Elektroschweißanlage oder eine Plasmaschweiß- oder -schneidanlage mit Netzkabel zum Anschluss an ein Stromnetz gemäß dem Oberbegriff von Anspruch 1.

Zum Schweißen auf Baustellen werden üblicherweise Elektroschweißgeräte eingesetzt, da diese deutlich kleiner und damit besser zu transportieren sind als vergleichbare Gasschweißgeräte. Insbesondere das einfachere Handling derartiger elektrischer Schweißgeräte ist auf Baustellen von großem Vorteil, da dort oftmals das Schweißgerät an unterschiedlichen Orten eingesetzt werden muss. Bei üblichen Elektroschweißgeräten wird beim Wechseln des Einsatzortes zunächst das Schweißgerät vom Stromnetz getrennt und an den neuen Einsatzort verbracht. Danach muss das Netzkabel zum Anschluss des elektrischen Schweißgerätes an das Stromnetz ebenfalls neu verlegt werden und eine neue Verbindung hergestellt werden. Das Verändern des Einsatzortes des elektrischen Schweißgerätes erfordert somit mehrere Arbeitsgänge, wodurch ein schnelles, einfaches und dadurch auch zeitminimierendes Wechseln des Einsatzortes nicht möglich ist.

Die Erfindung beschäftigt sich mit dem Problem, eine verbesserte Ausführungsform einer gattungsgemäßen Stromquelle anzugeben, welche insbesondere das zügige Wechseln von Einsatzorten erleichtert.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die Erfindung beruht auf dem allgemeinen Gedanken, eine auf Baustellen einsetzbare elektrische Stromquelle, die ein Netzkabel zum Anschluss an ein Stromnetz aufweist, in einer Kabeltrommel für das Netzkabel anzuordnen. Derartige Kabeltrommeln sind ohnehin häufig auf Baustellen anzutreffen und werden benötigt, um vielerlei Stromverbraucher mit einer meist zentralen Stromversorgung bzw. einem meist zentral gelegenen Anschluss an das Stromnetz zu verbinden. Die erfindungsgemäß zum Einsatz kommende Kabeltrommel kann somit wie eine herkömmliche Kabeltrommel verwendet werden, wobei die elektrische Stromquelle bereits erfindungsgemäß in der Kabeltrommel untergebracht ist, so dass ein separater Transport derartiger Geräte und dadurch ein aufwändiges Transportieren entfallen können. Eine derartige elektrische Stromquelle kann beispielsweise eine Schweißstromquelle sein, so dass mit der erfindungsgemäß in der Kabeltrommel angeordneten Schweißstromquelle bereits beim Verlegen des Netzkabels zwischen der zentralen Stromversorgung und dem Einsatzort sich auch die Schweißstromquelle bereits am Einsatzort befindet und zur Inbetriebnahme lediglich noch eine Schweißelektrode bzw. ein Massekabel mit der Kabeltrommel verbunden werden müssen. Denkbar ist hierbei, dass die Schweißelektrode bzw. das Massekabel ebenfalls an der Kabeltrommel angeordnet, insbesondere aufgewickelt werden können, so dass die Kabeltrommel ein im Wesentlichen komplettes Elektroschweißgerät darstellt. Die Stromquelle kann auch so ausgebildet sein, dass sie beispielsweise ein WIG, MIG-MAG, und/oder ein Plasmaschweißen bzw. -schneiden ermöglicht.

Erfindungsgemäß ist die Kabeltrommel in einem Traggestell drehgelagert. Bevorzugt ist das Traggestell in der Art eines Trolleys ausgebildet und weist einen Griff und zumindest zwei Räder auf. Hierdurch wird ein besonders einfaches Handling der Kabeltrommel erreicht, da diese auf ihren Rädern problemlos zum jeweiligen Einsatzort gefahren werden kann. Dies ist insbesondere für größere Ausführungsformen erfindungsgemäßer Kabeltrommeln von Vorteil.

Bei einer vorteilhaften Ausführungsform der erfindungsgemäßen Lösung weist die Kabeltrommel eine als Kühlluftkanal für die Stromquelle ausgebildete Nabe auf. Diese ermöglicht eine Kühlung der im Wesentlichen zentral in der Kabeltrommel angeordneten Stromquelle und erlaubt dadurch auch eine Anordnung von leistungsstärkeren Stromquellen, welche ohne eine Kühlung irgendeiner Art nicht betrieben werden könnten.

Um die Kühlwirkung bei sehr leistungsstarken Stromquellen weiter steigern zu können, kann darüber hinaus vorgesehen werden, dass in der Nabe ein Gebläse zur zwangsweisen Luftkühlung der Stromquelle angeordnet ist. Dieses Gebläse verstärkt die Kühlwirkung und ist vorzugsweise direkt mit dem Netzkabel der Kabeltrommel verbunden, so dass das Gebläse automatisch eingeschaltet wird, sobald die Kabeltrommel mit dem Netzkabel an das Stromnetz angeschlossen wird. Eine Überhitzung der in der Kabeltrommel angeordneten Stromquelle kann dadurch wirksam ausgeschlossen werden.

Bei einer weiteren vorteilhaften Ausführungsform der erfindungsgemäßen Lösung sind an der Stirnseite der Kabeltrommel Bedienelemente zur Steuerung der Stromquelle angeordnet. Insbesondere bei einer als Schweißstromquelle ausgebildeten Stromquelle kann somit über die stirnseitig an der Kabeltrommel angeordneten Bedienelemente Einfluss auf die Schweißeigenschaften genommen werden. Insbesondere ist dabei denkbar, dass sich über die Bedienelemente die Leistung der Schweißstromquelle variieren lässt, so dass die Leistung an individuelle Schweißarbeiten, z. B. dünnes oder dickes Material, problemlos anpassen lässt.

Bei einer weiteren vorteilhaften Ausführungsform der erfindungsgemäßen Lösung sind an einer Stirnseite der Kabeltrommel Steckeraufnahmen:für den elektrischen Anschluss zumindest eines Schweißelektrodenkabels und wenigstens eines beim Schweißen mit einem Werkstück zu verbindenden Massekabels angeordnet. Hierbei ist die in der Kabeltrommel angeordnete Stromquelle wiederum als Schweißstromquelle ausgebildet und ermöglicht dadurch einen flexiblen und einfachen Einsatz eines elektrischen Schweißgerätes auf einer Baustelle. Dabei wird zunächst beginnend bei einem Anschluss an das Stromnetz das Netzkabel mit dem Stromnetz verbunden, woraufhin der Arbeiter sich zum Einsatzort begibt und dabei das auf der Kabeltrommel aufgewickelte Netzkabel abrollt. Nach dem Erreichen des Einsatzortes werden das Schweißelektrodenkabel und das Massekabel über die Steckeraufnahmen an der Stirnseite der Kabeltrommel eingesteckt. Selbstverständlich können an diese Stirnseite auch Steckeraufnahmen in der Art einer normalen Steckdose vorgesehen sein, so dass an der Kabeltrommel neben spezifischen Geräten, wie beispielsweise oben erwähntem Schweißelektrodenkabel und Massekabel auch andere elektrische Verbraucher, wie beispielsweise eine Bohrmaschine, mit dem Stromnetz verbunden werden können.

Weitere wichtige Merkmale und Vorteile der Erfindung ergeben sich aus den Unteransprüchen, aus denen Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine erfindungsgemäß in einer Kabeltrommel angeordnete elektrische Stromquelle ,
- Fig. 2: eine Darstellung wie in Fig. 1, jedoch bei einer anderen Ausführungsform.

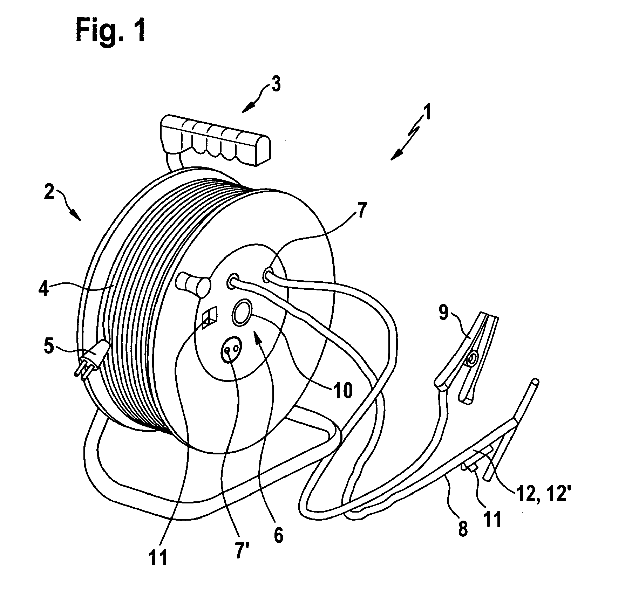

In Fig. 1 ist eine erfindungsgemäße und auf Baustellen einsetzbare elektrische Stromquelle 1 in der Art einer Schweißstromquelle gezeigt, welche in einer Kabeltrommel 2 angeordnet ist. Die Kabeltrommel 2 ist in einem als Traggestell ausgebildeten Ständer 3 drehgelagert und weist ein Netzkabel 4 mit einem Stecker 5 zum Anschluss an ein Stromnetz auf. Die elektrische Stromquelle 1, welche als Schweißstromquelle ausgebildet ist, ist auf Baustellen einsetzbar. Der Begriff Baustelle ist hierbei nicht nur auf Baustellen des Hoch-/Tiefbaus beschränkt, sondern soll auch Baustellen in Werften, im Waggonbau, oder sonstige mobile Einsatzstellen mit umfassen. Die Stromquelle 1 ist relativ zur Kabeltrommel 2 vorzugsweise stationär angeordnet, d.h. sie dreht sich bei einem Abrollen des Netzkabels 4 von der Kabeltrommel 2 mit dieser mit.

An einer Stirnseite 6 der Kabeltrommel 2 sind Steckeraufnahmen 7 vorgesehen, welche einen elektrischen Anschluss zumindest eines Schweißelektrodenkabels 8 und wenigstens eines beim Schweißen mit einem Werkstück zu verbindenden Massekabels 9 erlauben. Darüber hinaus können auch Steckeraufnahmen 7' vorgesehen sein, welche in der Art einer üblichen Steckdose ausgebildet sind und einen Anschluss von elektrischen Geräten, wie beispielsweise einer Bohrmaschine, an ein Stromnetz erlauben. Prinzipiell kann die Stirnseite 6 mit den daran angeordneten Steckeraufnahmen 7, 7' entweder mit der Kabeltrommel 2 drehfest verbunden sein, wodurch sich die Stirnseite 6 bei einem Abwickeln des Netzkabels 4 mit der Kabeltrommel 2 mitdreht, oder aber zwischen der Kabeltrommel 2 und der Stirnseite 6 können Schleifkontakte vorgesehen sein, so dass sich die Stirnseite 6 auch bei einem Abrollen des auf der Kabeltrommel 2 aufgerollten Netzkabels 4 nicht mitdreht, was insbesondere den Transport der Kabeltrommel 2 bei gleichzeitig in ein Stromnetz eingestecktem Netzstecker 5 und über die Steckeraufnahmen 7 mit der Kabeltrommel verbundenen Schweißelektroden 8 bzw. Massekabel 9 erleichtert.

Generell kann die Stromquelle 1 auch zum Plasmaschneiden in Betracht kommen, ebenso wie die Schweißstromquelle für unterschiedlichste Schweißverfahren benutzt werden kann, insbesondere für MIG-MAG, WIG und/oder Plasmaschweißen.

Um einen Kühlbedarf der in der Kabeltrommel 2 angeordneten Stromquelle 1 decken zu können, weist die Kabeltrommel 2 vorzugsweise eine als Kühlluftkanal für die Stromquelle 1 ausgebildete Nabe 10 auf, durch welche Kühlluft durch die Kabeltrommel 2 strömen und die Stromquelle 1 kühlen kann. Dabei kann zusätzlich ein nicht gezeigtes Gebläse in der Nabe 10 vorgesehen sein, welche eine zwangsweise Kühlung, insbesondere eine Luftkühlung, der Stromquelle 1 bewirkt. Das Gebläse ist dabei vorzugsweise mit dem Netzkabel 4 elektrisch leitend verbunden, so dass das Gebläse unmittelbar nach dem Verbinden des Netzsteckers 5 mit dem Stromnetz zu laufen beginnt. Ein derartiges Gebläse ist insbesondere für leistungsstarke Stromquellen 1 von großem Vorteil, welche sich ansonsten zu stark erwärmen würden und zu einer Beschädigung führen könnten.

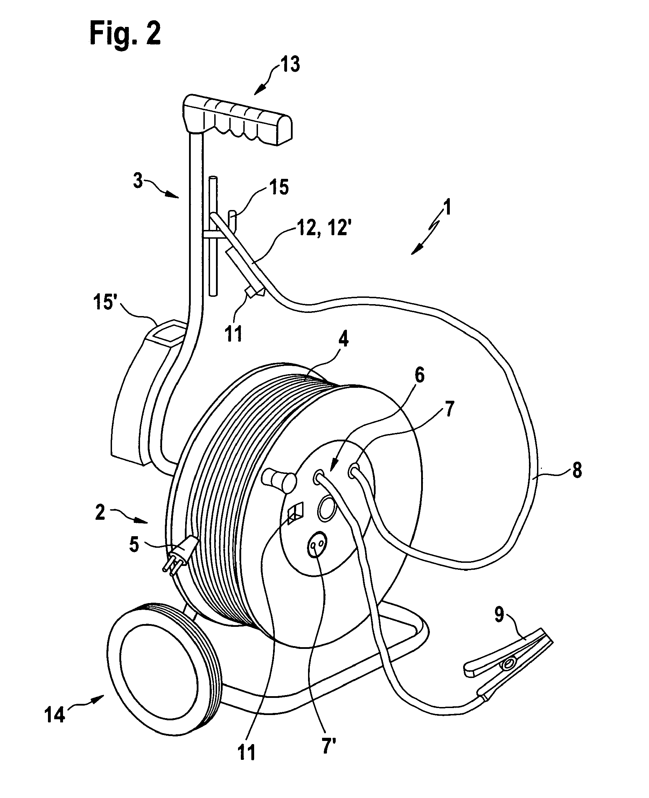

Neben den Steckeraufnahmen 7 bzw. 7' können gemäß einer bevorzugten Ausführungsform, wie in den Fig. 1 und 2 dargestellt, an der Stirnseite 6 der Kabeltrommel 2 Bedienelemente 11 zur Steuerung der Stromquelle 1 angeordnet sein. Mit Hilfe dieser Bedienelemente 11 können beispielsweise ein Schweißstrom und damit die Schweißleistung gesteuert werden. Denkbar ist auch, dass je nach Art der in der Kabeltrommel 2 angeordneten Stromquelle 1 andere Bedienelemente 11 vorgesehen sein können, mit Hilfe derer sich unterschiedliche Arten elektrischer Parameter verändern und damit die elektrische Stromquelle 1 steuern lassen. Denkbar ist auch, dass zusätzlich oder alternativ an einem Schweißelektrodenhalter 12 oder einer Handhabe 12' der Schweißelektrode Bedienelemente 11' zur Steuerung der als Schweißstromquelle ausgebildeten Stromquelle 1 angeordnet sind. Somit können die Schweißelektrode 8 und das Massekabel 9 in üblicher Weise in die Steckeraufnahme 7 eingesteckt werden und die Steuerung des Schweißprozesses ausschließlich über die Bedienelemente 11' am Schweißelektrodenhalter 12 bzw. an der Handhabe 12' vorgenommen werden.

Wie in Fig. 1 und 2 gezeigt, ist die Kabeltrommel 2 in einem als Traggestell ausgebildeten Ständer 3 drehgelagert. Dies ermöglicht ein sicheres Abstellen der Kabeltrommel 2 auch auf unebenem Gelände und erhöht dadurch die Arbeitssicherheit auf den Baustellen. Um die erfindungsgemäße Kabeltrommel 2 mit der integrierten elektrischen Stromquelle 1 auch über längere Strecken problemlos transportieren zu können, kann gemäß der Ausführungsform der Fig. 2 der Ständer 3 in der Art eines Trolleys ausgebildet sein und einen Griff 13 sowie zumindest zwei Räder 14 aufweisen. Dies ermöglicht ein leichtes Verfahren in der Art eines Golfcaddies, so dass die Stromquelle 1 samt Kabeltrommel 2 und Ständer 3 problemlos händisch nachführbar sind. Hierbei sind auch spezielle Halterungen 15 zur Halterung beispielsweise des Schweißelektrodenhalters 12 bzw. der Handhabe 12' und/oder des Massekabels 9 denkbar. Dabei können die Schweißelektroden 8 bzw. das Massekabel 9 nach Gebrauch entweder ebenfalls auf die Kabeltrommel 2 aufgewickelt werden oder am Halter 15 fixiert werden, wodurch diese während des Transportes gesichert sind. Darüber hinaus ist vorstellbar, dass an dem Ständer 3 weitere Halterungen 15', beispielsweise zur Aufnahme von Schweißdraht oder ähnlichem vorgesehen sind.

Zusammenfassend lassen sich die wesentlichen Merkmale der erfindungsgemäßen Lösung wie folgt charakterisieren:
Die Erfindung schlägt vor, eine auf Baustellen einsetzbare elektrische Stromquelle 1 für eine Elektroschweißanlage oder eine Plasmaschweiß- oder schneidanlage mit einem Netzkabel 4 zum Anschluss an ein Stromnetz in einer Kabeltrommel 2 für das Netzkabel 4 unterzubringen. Dies ist besonders für einen flexiblen und schnellen Wechseleinsatz von großem Vorteil, da die Stromquelle 1 und die Kabeltrommel 2 eine Einheit bilden. Gleichzeitig ist die Stromquelle 1 geschützt innerhalb der Kabeltrommel 2 angeordnet, was insbesondere für die auf Baustellen herrschenden rauen Umgebungsbedingungen von großem Vorteil ist.

## Patentansprüche

1. Elektrische Stromquelle für eine Elektroschweißanlage oder eine Plasmaschweiß- oder -schneidanlage, wobei die Stromquelle (1) auf Baustellen einsetzbar ist und ein Netzkabel (4) zum Anschluss an ein Stromnetz aufweist, **dadurch gekennzeichnet, dass** die Stromquelle (1) in einer tragbaren Kabeltrommel (2) angeordnet ist, die in einem Traggestell (3) drehbar gelagert ist.

2. Stromquelle nach Anspruch 1, **dadurch gekennzeichnet, dass** das Traggestell (3) in der Art eines Trolleys ausgebildet ist und einen Griff (13) und zumindest zwei Räder (14) aufweist.

3. Stromquelle nach Anspruch 1 oder 2, **dadurch gekennzeichnet, dass** die Stromquelle (1) relativ zur Kabeltrommel (2) stationär angeordnet ist.

4. Stromquelle nach einem der Ansprüche 1 bis 3, **dadurch gekennzeichnet, dass** die Kabeltrommel (2) eine als Kühlluftkanal für die Stromquelle (1) ausgebildete Nabe (10) aufweist.

5. Stromquelle nach Anspruch 4, **dadurch gekennzeichnet, dass** in der Nabe (10) ein Gebläse zur zwangsweisen Luftkühlung der Stromquelle (1) angeordnet ist.

6. Stromquelle nach einem der Ansprüche 1 bis 5, **dadurch gekennzeichnet, dass** an einer Stirnseite (6) der Kabeltrommel (2) Steckeraufnahmen (7) für den elektrischen Anschluss zumindest eines Schweißelektrodenkabels (8) und wenigstens eines beim Schweißen mit einem Werkstück zu verbindenden Massekabels (9) angeordnet sind.

7. Stromquelle nach Anspruch 6, **dadurch gekennzeichnet, dass** an der Stirnseite (6) der Kabeltrommel (2) Bedienelemente (11) zur Steuerung der Stromquelle (1) angeordnet sind.

8. Stromquelle nach einem der Ansprüche 1 bis 7, **dadurch gekennzeichnet, dass** zusätzlich oder alternativ an einem Schweißelektrodenhalter (12) oder einer Handhabe (12') der Schweißelektrode (8) Bedienelemente (11) zur Steuerung der als Schweißstromquelle ausgebildeten Stromquelle (1) angeordnet sind.
